# EUROPEAN PATENT APPLICATION

(11) **EP 4 704 159 A1**
(43) Date of publication of application: **04.03.2026**
(21) Application number: 24796837.3
(22) Date of filing: 12.04.2024
(51) Int. Cl.: H01M 4/02, H01M 4/04, H01M 4/13, H01M 4/66, H01M 4/139

(54) **ELECTRODE, BATTERY, AND METHOD FOR MANUFACTURING ELECTRODE**

(30) Priority: 28.04.2023 JP 2023075297
(71) Applicant: Vehicle Energy Japan Inc., Hitachinaka-shi, Ibaraki 312-8505 (JP)
(72) Inventor: KUROKI, Yasutaka, Hitachinaka-shi, Ibaraki 312-8505 (JP)
(74) Representative: Strehl & Partner mbB
(86) International application number: PCT/JP2024/014852
(87) International publication number: WO 2024/225081

(57) **Abstract**

An electrode (positive electrode (100)) includes a current collector layer (positive electrode current collector layer (110)), an active material layer (positive electrode active material layer (120)) that is stacked on and joined to the current collector layer and contains an active material (positive electrode active material (121)), and an end portion insulating layer (130) that extends from the side of an end portion (110b) of the current collector layer to a side portion (120a) of the active material layer (positive electrode active material layer (120)) and is stacked on the current collector layer to be joined to the current collector layer and the active material layer, the end portion insulating layer (130) containing particles (131) and a binder (132). The occupancy percentage of the particles (131) in the end portion insulating layer (130) is at least 55% and at most 99.5%. The occupancy percentage of the particles (131) and the binder (132) in the end portion insulating layer (130) is at least 55.5% and at most 99%. The thickness of the end portion insulating layer (130) along a stacking direction Z is at least 1/20 and at most 1/2 of the thickness of the active material layer (positive electrode active material layer (120)) along the stacking direction Z.

## Description

### Technical Field

The present invention relates to an electrode, a battery, and a manufacturing method for an electrode.

### Background Art

Conventionally, there is known a technology relating to an electrode in which an active material layer and an insulating layer are joined at an end portion of a current collector layer (for example, refer to Patent Document 1).

### Prior Art Document

### Patent Document

Patent Document 1: JP-3613400-B

### Summary of the Invention

### Problem to be Solved by the Invention

It is demanded to suppress separation of an end portion insulating layer joined to an active material layer from a current collector layer.

### Means for Solving the Problem

An electrode of the present invention has a current collector layer, an active material layer, and an end portion insulating layer. The active material layer is stacked on and joined to the current collector layer and contains an active material. The end portion insulating layer extends from the side of an end portion of the current collector layer to a side portion of the active material layer and is stacked on the current collector layer to be joined to the current collector layer and the active material layer, the end portion insulating layer containing particles and a binder. The occupancy percentage of the particles in the end portion insulating layer is equal to or higher than 55% and is equal to or lower than 99.5%. The occupancy percentage of the particles and the binder in the end portion insulating layer is equal to or higher than 55.5% and is equal to or lower than 99%. The thickness of the end portion insulating layer along a stacking direction is equal to or larger than 1/20 of the thickness of the active material layer along the stacking direction and is equal to or smaller than 1/2 of the thickness of the active material layer along the stacking direction.

A battery of the present invention has a positive electrode, a negative electrode, and an insulator disposed between the positive electrode and the negative electrode. At least one of the positive electrode and the negative electrode is the electrode.

A manufacturing method for an electrode according to the present invention is a manufacturing method for the electrode. In the manufacturing method for the electrode, end portion insulating layer slurry that contains the particles, the binder, and a solvent having vaporability and forms the end portion insulating layer after the current collector layer and the active material layer are coated with the end portion insulating layer slurry is used. The manufacturing method for the electrode includes a coating step of coating the current collector layer and the active material layer with the end portion insulating layer slurry. The percentage of shrinkage accompanying drying regarding the end portion insulating layer slurry is equal to or higher than 1% and is equal to or lower than 40%.

### Advantages of the Invention

It is possible to obtain the electrode in which separation of the end portion insulating layer from the current collector layer is suppressed and the battery including such an electrode.

### Brief Description of the Drawings

FIG. 1 is a perspective view depicting a battery 1 of a first embodiment.
FIG. 2 is a perspective view depicting a charge/discharge body 10 of the battery 1.
FIG. 3 is a sectional view depicting the charge/discharge body 10 along line 3A-3B in FIG. 2.
FIG. 4 is a sectional view depicting the charge/discharge body 10 in region 4 in FIG. 3.
FIG. 5 is a side view schematically depicting a manufacturing method for a positive electrode 100.
FIG. 6 is a top view depicting, in a schematic diagram, a state of coating of a positive electrode current collector layer 110 with slurry in FIG. 5.
FIG. 7 is a sectional view depicting a charge/discharge body 20 of a battery of a second embodiment.
FIG. 8 is a side view schematically depicting a manufacturing method for a positive electrode 400 included in the charge/discharge body 20 in FIG. 7.
FIG. 9 is a top view depicting, in a schematic diagram, a state of coating of the positive electrode current collector layer 110 with the slurry in FIG. 8.
FIG. 10 is a sectional view depicting a charge/discharge body 30 of a battery of a third embodiment.

### Modes for Carrying Out the Invention

Embodiments for carrying out the present invention are described with reference to the drawings. In order to facilitate understanding of each embodiment, the size or the ratio of a constituent component is exaggerated in some cases in each drawing. In sectional views of an active material layer and the like, a binder and an additive material around active materials are depicted by depicting the active materials adjacent to each other in a state in which these active materials are not in contact with each other. In each drawing, the same configuration is given the same numeral. A short-side direction X of a positive electrode 100, a negative electrode 200, and a separator 300 in a stacked state is indicated by an arrow. A longitudinal direction Y of the positive electrode 100, the negative electrode 200, and the separator 300 in the stacked state is indicated by an arrow. A stacking direction Z of the positive electrode 100, the negative electrode 200, and the separator 300 in the stacked state is indicated by an arrow.

An electrode of the embodiments corresponding to the present invention is described as a positive electrode. A negative electrode is also included in the electrode of the embodiments corresponding to the present invention. A battery 1 of the embodiment corresponding to the present invention is described as a battery with a rectangular parallelepiped shape. A battery with a circular column shape is also included in the battery 1 of the embodiment corresponding to the present invention.

(Configuration of Battery 1 Including Positive Electrode 100 of First Embodiment)

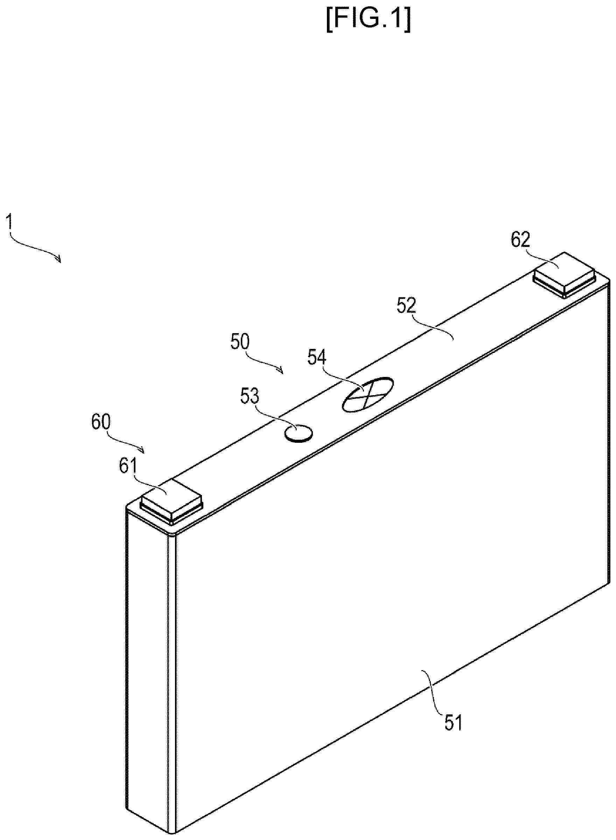

A configuration of the battery 1 including the positive electrode 100 of a first embodiment is described with reference to FIGs. 1 to 4.

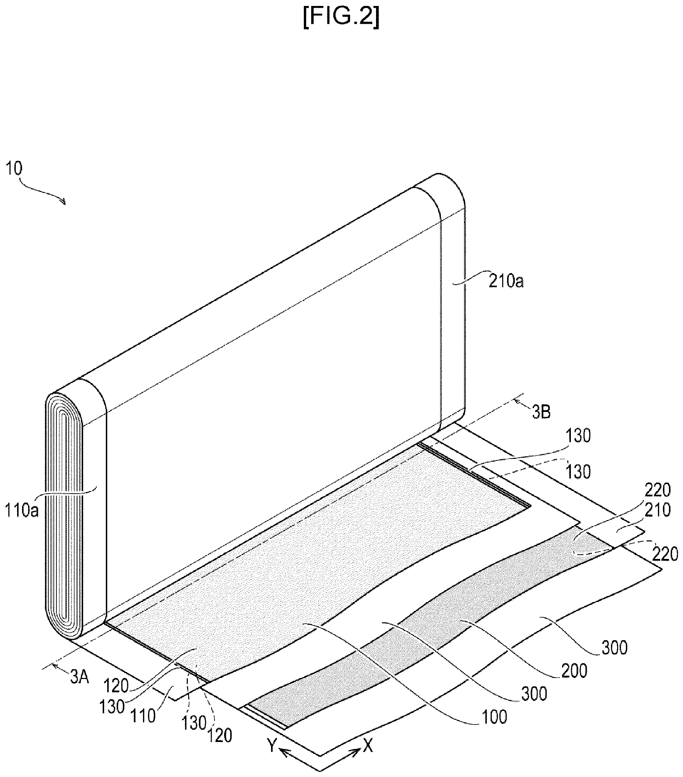

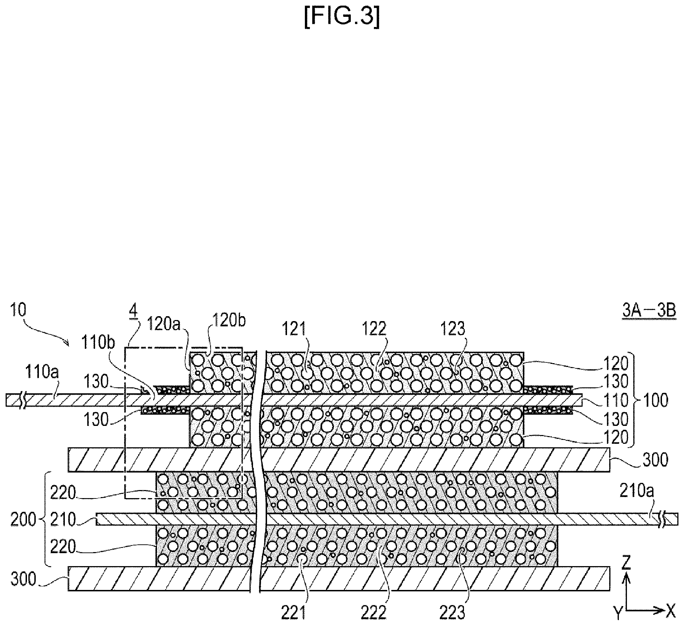

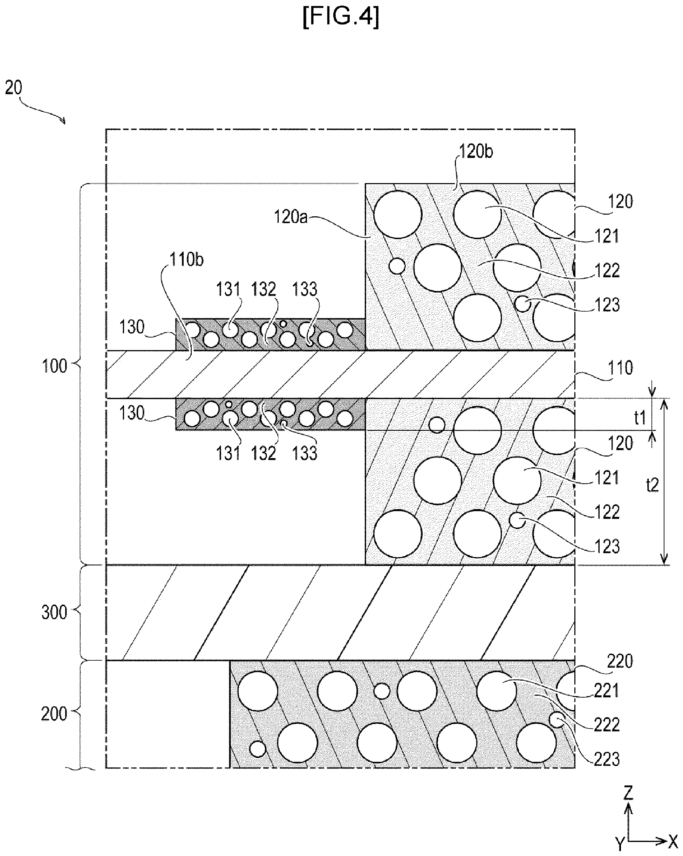

FIG. 1 is a perspective view depicting the battery 1 of the first embodiment. FIG. 2 is a perspective view depicting a charge/discharge body 10 of the battery 1. FIG. 3 is a sectional view depicting the charge/discharge body 10 along line 3A-3B in FIG. 2. FIG. 4 is a sectional view depicting the charge/discharge body 10 in region 4 in FIG. 3.

The battery 1 is, for example, a lithium-ion secondary battery. The battery 1 includes the charge/discharge body 10, an exterior package 50, and an external terminal 60 as depicted in FIGs. 1 to 4. Main configurations included in the battery 1 are described below.

The charge/discharge body 10 is charged and discharged. The charge/discharge body 10 depicted in FIGs. 2 and 3 includes the positive electrode 100, the negative electrode 200, the separator 300, and an electrolyte (what is called an electrolytic solution). For example, the charge/discharge body 10 is formed by stacking the positive electrode 100, the negative electrode 200, and two separators 300 in order of the positive electrode 100, the separator 300, the negative electrode 200, and the separator 300 and winding them into a rectangular parallelepiped shape. In the charge/discharge body 10, in particular, the separators 300 are infiltrated with the electrolyte. The charge/discharge body 10 is covered by an insulating sheet in a state in which a positive electrode current collector plate and a negative electrode current collector plate are joined thereto.

The positive electrode 100 (electrode) includes a positive electrode current collector layer 110, positive electrode active material layers 120, and end portion insulating layers 130 as depicted in FIG. 3.

The positive electrode current collector layer 110 (current collector layer) is formed into, for example, an elongated shape. That is, the positive electrode current collector layer 110 is formed into a foil shape. A positive electrode current collection portion 110a is disposed along the longitudinal direction Y at one end portion of the positive electrode current collector layer 110 in the short-side direction X. The positive electrode current collector layer 110 is formed of, for example, aluminum or an aluminum alloy. For the positive electrode current collector layer 110, for example, A3003 of the JIS standard is used. A3003 is a non-heat-treatable Al-Mn-based alloy. The thickness of the positive electrode current collector layer 110 along the stacking direction Z is, for example, 10 µm. The thickness of the positive electrode current collector layer 110 is selected in, for example, a range of 5 to 30 µm.

The positive electrode active material layers 120 (active material layers) are disposed on the positive electrode current collector layer 110. The positive electrode active material layers 120 are opposite to each other along the stacking direction Z in such a state as to be stacked on and joined to both surfaces of the positive electrode current collector layer 110. The thickness of the positive electrode active material layer 120 along the stacking direction Z is, for example, 30 or 40 µm. The thickness of the positive electrode active material layer 120 is selected in, for example, a range of 10 to 200 µm.

A positive electrode active material 121, a positive electrode binder 122, and a positive electrode conduction auxiliary agent 123 are contained in the positive electrode active material layer 120.

As the positive electrode active material 121 (active material), for example, a lithium-containing composite oxide is used. The lithium-containing composite oxide includes, for example, a metal element such as nickel (Ni), cobalt (Co), and manganese (Mn) and lithium (Li). The positive electrode active material 121 is formed into a particle shape. A mean particle size (D50) of the positive electrode active material 121 is, for example, 25 µm. The mean particle size (D50) of the positive electrode active material 121 is selected in, for example, a range of 1 to 50 µm.

The positive electrode binder 122 joins the positive electrode active materials 121 to each other. For the positive electrode binder 122, for example, the following material is used: polyvinylidene difluoride (PVdF), polytetrafluoroethylene (PTFE), polyethylene (PE), polystyrene, polybutadiene, polyacrylonitrile, polyvinyl fluoride, polypropylene fluoride, polychloroprene fluoride, butyl rubber, nitrile rubber, styrene-butadiene rubber (SBR), polysulfide rubber, nitrocellulose, cyanoethyl cellulose, various latexes, an acrylic resin, or a mixture of them.

The positive electrode conduction auxiliary agent 123 improves characteristics of the positive electrode 100. The positive electrode conduction auxiliary agent 123 is disposed to be mixed with the positive electrode active material 121, and enhances electrical conductivity between the positive electrode current collector layer 110 and the positive electrode active material 121. That is, the positive electrode conduction auxiliary agent 123 ensures, in the positive electrode 100, an electrical conduction path between the positive electrode current collector layer 110 and the positive electrode active material 121. For the positive electrode conduction auxiliary agent 123, for example, a carbon-based material is used. The carbon-based material is, for example, crystalline carbon, amorphous carbon, or a mixture of them. The crystalline carbon is, for example, artificial graphite, natural graphite, or a mixture of them. The natural graphite is, for example, flake graphite, vein graphite, or amorphous graphite. The amorphous carbon is, for example, carbon black. The carbon black is, for example, acetylene black, Ketjen black, channel black, furnace black, lamp black, thermal black, or a mixture of them.

The end portion insulating layer 130 extends from the side of an end portion 110b of the positive electrode current collector layer 110 to a side portion 120a of the positive electrode active material layer 120 and is stacked on the positive electrode current collector layer 110 to be joined to the positive electrode current collector layer 110 and the positive electrode active material layer 120 as depicted in FIG. 4.

A thickness t1 of the end portion insulating layer 130 along the stacking direction Z is at least 1/20 and at most 1/2 of a thickness t2 of the positive electrode active material layer 120 along the stacking direction Z. The thickness t1 of the end portion insulating layer 130 along the stacking direction Z may be set to at least 1/10 and at most 1/5 of the thickness t2 of the positive electrode active material layer 120 along the stacking direction Z. The thickness t1 of the end portion insulating layer 130 along the stacking direction Z is at least 1 µm and at most 15 µm at a portion joined to the positive electrode current collector layer 110 or a portion joined to the positive electrode active material layer 120. The thickness t1 of the end portion insulating layer 130 along the stacking direction Z may be set to at least 2 µm and at most 5 µm.

Particles 131, a binder 132, and an additive material 133 are contained in the end portion insulating layer 130 as depicted in FIG. 4.

The particles 131 are composed of an inorganic substance or an organic substance. The particles 131 are, for example, organic particles or inorganic particles. The organic particles are, for example, acrylic particles. The organic particles are easily dispersed in a solvent compared with the inorganic particles. In particular, the acrylic particles are relatively easily dispersed in a solvent. A mean particle size (D50) of the particles 131 is at least 0.5 µm and at most 5.0 µm. The particles 131 have an insulating property. It is preferable for the particles 131 to have heat resistance. The occupancy percentage of the particles 131 in the end portion insulating layer 130 is at least 55% and at most 99.5%.

The binder 132 joins the particles 131 to each other. The binder 132 has an insulating property. The occupancy percentage of the particles 131 and the binder 132 in the end portion insulating layer 130 is at least 55.5% and at most 99%. That is, the occupancy percentage of the binder 132 in the end portion insulating layer 130 is at least 0.5% and at most 45%.

The additive material 133 allows, for example, the particles 131 and the binder 132 to be evenly dispersed. The additive material 133 is not indispensable for the end portion insulating layer 130.

The positive electrode 100 may include an insulating layer that covers the positive electrode active material layer 120. The insulating layer has heat resistance. The insulating layer contains, for example, an inorganic material or an organic substance and a binder. The inorganic material is, for example, alumina particles.

The negative electrode 200 includes a negative electrode current collector layer 210 and negative electrode active material layers 220 as depicted in FIG. 3.

The negative electrode current collector layer 210 is formed into, for example, an elongated shape. That is, the negative electrode current collector layer 210 is formed into a foil shape. A negative electrode current collection portion 210a is disposed along the longitudinal direction Y at one end portion of the negative electrode current collector layer 210 in the short-side direction X. The negative electrode current collection portion 210a of the negative electrode current collector layer 210 is opposite to the positive electrode current collection portion 110a of the positive electrode current collector layer 110 in the short-side direction X. The negative electrode current collector layer 210 is formed of, for example, copper or a copper alloy. The thickness of the negative electrode current collector layer 210 along the stacking direction Z is, for example, 10 µm. The thickness of the negative electrode current collector layer 210 is selected in, for example, a range of 5 to 30 µm.

The negative electrode active material layers 220 are disposed on the negative electrode current collector layer 210. The negative electrode active material layers 220 are opposite to each other along the stacking direction Z in such a state as to be joined to both surfaces of the negative electrode current collector layer 210. The width of the negative electrode active material layer 220 along the short-side direction X is long as compared with the positive electrode active material layer 120. In a state in which the negative electrode 200 is opposite to the positive electrode 100 with the interposition of the separator 300, both ends of the negative electrode active material layer 220 in the short-side direction X are located outside in the short-side direction X relative to both ends of the positive electrode active material layer 120 in the short-side direction X. The thickness of the negative electrode active material layer 220 along the stacking direction Z is, for example, 30 or 40 µm. The thickness of the negative electrode active material layer 220 is selected in, for example, a range of 10 to 200 µm.

A negative electrode active material 221 and a negative electrode binder 222 are contained in the negative electrode active material layer 220. A negative electrode conduction auxiliary agent 223 may be contained in the negative electrode active material layer 220.

As the negative electrode active material 221, for example, carbon is used. The carbon is, for example, graphite, non-graphitizable carbon (hard carbon), or graphitizable carbon (soft carbon). The graphite is, for example, natural graphite or artificial graphite. The natural graphite is, for example, flake graphite, vein graphite, or amorphous graphite. The negative electrode active material 221 is formed into a particle shape. A mean particle size (D50) of the negative electrode active material 221 is, for example, 25 µm. The mean particle size (D50) of the negative electrode active material 221 is selected in, for example, a range of 1 to 50 µm.

The negative electrode binder 222 joins the negative electrode active materials 221 to each other. For the negative electrode binder 222, for example, a material similar to that of the positive electrode binder 122 is used.

The negative electrode conduction auxiliary agent 223 improves characteristics of the negative electrode 200. The negative electrode conduction auxiliary agent 223 is disposed to be mixed with the negative electrode active material 221, and enhances electrical conductivity between the negative electrode current collector layer 210 and the negative electrode active material 221. That is, the negative electrode conduction auxiliary agent 223 ensures, in the negative electrode 200, an electrical conduction path between the negative electrode current collector layer 210 and the negative electrode active material 221.

The negative electrode 200 may include an insulating layer that covers the negative electrode active material layer 220. The insulating layer has heat resistance. The insulating layer contains, for example, an inorganic material or an organic substance and a binder. The inorganic material is, for example, alumina particles.

The separator 300 insulates the positive electrode 100 from the negative electrode 200 as depicted in FIG. 3. Further, the separators 300 retain the electrolyte (what is called an electrolytic solution). The separators 300 are formed into an elongated shape. The width of the separator 300 along the short-side direction X is long as compared with the negative electrode active material layer 220. In the state in which the positive electrode 100 is opposite to the negative electrode 200 with the interposition of the separator 300, in the range of the separator 300 along the short-side direction X, both ends of the positive electrode active material layer 120 in the short-side direction X are located and both ends of the negative electrode active material layer 220 in the short-side direction X are located. The thickness of the separator 300 along the stacking direction Z is, for example, 20 µm. The thickness of the separator 300 is selected in, for example, a range of 5 to 60 µm.

The separators 300 are formed of a porous material. As the porous material, for example, polyethylene, polypropylene, polyester, cellulose, or polyamide is used. The separators 300 may have a configuration obtained by stacking a plurality of different porous materials.

The separator 300 may include an insulating layer. The insulating layer has heat resistance. The insulating layer contains, for example, an inorganic material or an organic substance and a binder. The inorganic material is, for example, alumina particles.

The electrolyte causes distribution of lithium ions between the positive electrode 100 and the negative electrode 200. The electrolyte is referred to also as an electrolytic solution.

An organic solvent and a lithium salt are contained in the electrolyte. An additive material may be contained in the electrolyte.

As the organic solvent, for example, a carbonate ester such as ethylene carbonate is used. As the lithium salt, for example, lithium hexafluorophosphate (LiPF₆) is used. As the additive material, for example, lithium hexafluorophosphate (LiPF₆) is used.

The exterior package 50 houses the charge/discharge body 10. The exterior package 50 includes a container 51, a lid 52, a liquid injection plug 53, and a rupture valve 54 as depicted in FIG. 1. The container 51 is formed into a rectangular parallelepiped shape. The charge/discharge body 10 is housed in the container 51. The lid 52 is welded to the container 51. A liquid injection hole is made in the lid 52. The liquid injection hole is a hole for injecting the electrolyte (what is called an electrolytic solution) into the inside of the battery 1. The liquid injection plug 53 is attached to the liquid injection hole of the lid 52. The liquid injection plug 53 is inserted into the liquid injection hole and is welded after the electrolyte is injected into the inside of the battery 1 through the liquid injection hole. The rupture valve 54 is disposed in the lid 52. The rupture valve 54 is formed integrally with the lid 52. The rupture valve 54 ruptures toward the outside of the battery 1 when the internal pressure of the battery 1 exceeds a predetermined value.

The external terminal 60 relays input and output of power between the current collector disposed inside the battery 1 and electrical equipment disposed outside the battery 1. The electrical equipment is, for example, a relay or an inverter disposed in a vehicle. Moreover, the external terminal 60 disposed in one battery 1 is electrically connected to the external terminal 60 disposed in another battery 1 through a bus bar or the like, and relays input and output of power between the one battery 1 and the other battery 1. The external terminal 60 includes a positive electrode terminal 61 and a negative electrode terminal 62 as depicted in FIG. 1. The positive electrode terminal 61 is electrically connected to the positive electrode current collection portion 110a of the positive electrode current collector layer 110 through the positive electrode current collector plate. The positive electrode terminal 61 is attached to the lid 52 with the interposition of a positive electrode insulating member. The negative electrode terminal 62 is electrically connected to the negative electrode current collection portion 210a of the negative electrode current collector layer 210 through the negative electrode current collector plate. The negative electrode terminal 62 is attached to the lid 52 with the interposition of a negative electrode insulating member.

### (Manufacturing Method for Positive Electrode 100 of First Embodiment)

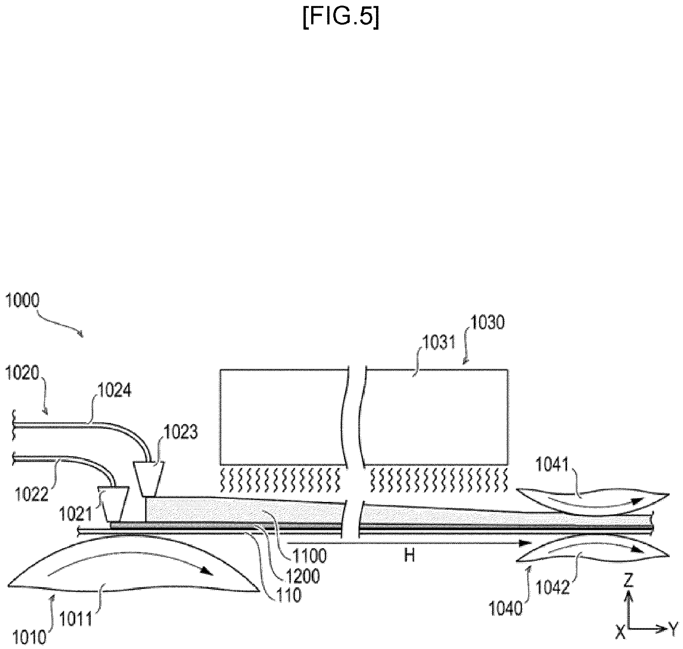

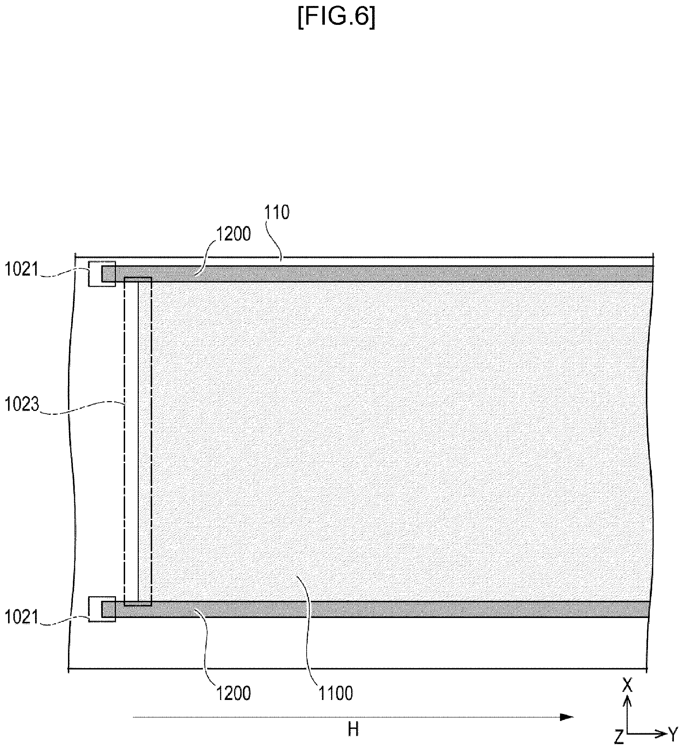

A manufacturing method for the positive electrode 100 is described with reference to FIGs. 5 and 6. FIG. 5 is a side view schematically depicting the manufacturing method for the positive electrode 100. FIG. 6 is a top view depicting, in a schematic diagram, a state of coating of the positive electrode current collector layer 110 with slurry in FIG. 5.

In the manufacturing method for the positive electrode 100, in a coating step, the positive electrode current collector layer 110 is coated with positive electrode active material layer slurry 1100 and end portion insulating layer slurry 1200.

The positive electrode active material layer slurry 1100 used in the application step contains a solvent in addition to components configuring the positive electrode active material layer 120. The positive electrode active material 121, the positive electrode binder 122, and the positive electrode conduction auxiliary agent 123 are included in the components configuring the positive electrode active material layer 120. The components contained in the positive electrode active material layer 120 are dispersed in the solvent. As the solvent, for example, a solvent having vaporability at a temperature equal to or higher than a room temperature is used. The solvent is, for example, N-methyl-2-pyrrolidone (N-methylpyrrolidone, NMP).

The end portion insulating layer slurry 1200 used in the application step contains a solvent in addition to components configuring the end portion insulating layer 130. The particles 131, the binder 132, and the like contained in the end portion insulating layer 130 are dispersed in the solvent. As the solvent, for example, a solvent having vaporability at a temperature equal to or higher than a room temperature is used. The solvent is, for example, N-methyl-2-pyrrolidone (N-methylpyrrolidone, NMP). The percentage of shrinkage accompanying drying regarding the end portion insulating layer slurry 1200 is at least 1% and at most 40%.

A manufacturing apparatus 1000 for the positive electrode 100 includes a transportation section 1010, a coating section 1020, a drying section 1030, and a rolling section 1040 as depicted in FIG. 5.

The transportation section 1010 transports members configuring the positive electrode 100 as depicted in FIG. 5. The transportation section 1010 includes a transportation roller 1011.

The transportation section 1010 transports the positive electrode current collector layer 110 in such a state as to be wound around a first roller that is not depicted to the coating section 1020, the drying section 1030, and the rolling section 1040 through the transportation roller 1011 and the like. The transportation section 1010 winds, around a second roller that is not depicted, the positive electrode current collector layer 110 to which the positive electrode active material layer 120 and the end portion insulating layer 130 are joined. When the second roller to which the positive electrode current collector layer 110 is attached rotates, the positive electrode current collector layer 110 is transported while the transportation roller 1011 and the first roller in contact with the positive electrode current collector layer 110 also rotate. A transportation direction H of the positive electrode current collector layer 110 corresponds to the longitudinal direction Y of the positive electrode current collector layer 110.

The coating section 1020 coats the positive electrode current collector layer 110 with the slurry as depicted in FIG. 5. The coating section 1020 includes first coating heads 1021, a first liquid sending tube 1022, a second coating head 1023, and a second liquid sending tube 1024.

Two first coating heads 1021 are disposed along the short-side direction X orthogonal to the transportation direction H of the positive electrode current collector layer 110, that is, orthogonal to the longitudinal direction Y of the positive electrode current collector layer 110, as depicted in FIGs. 5 and 6. The two first coating heads 1021 are opposite to each other along the short-side direction X of the positive electrode current collector layer 110. An opening is formed in the first coating heads 1021. The opening is connected to the first liquid sending tube 1022. The end portion insulating layer slurry 1200 is supplied from a tank that is not depicted to each first coating head 1021 through a pump that is not depicted and the first liquid sending tube 1022. Each first coating head 1021 is opposite to the transportation roller 1011 with the interposition of the positive electrode current collector layer 110. Each first coating head 1021 coats the positive electrode current collector layer 110 with the end portion insulating layer slurry 1200 in a state in which the positive electrode current collector layer 110 is being transported. The positive electrode current collector layer 110 is coated with the end portion insulating layer slurry 1200 such that pieces of the end portion insulating layer slurry 1200 are opposite to each other in the short-side direction of the positive electrode current collector layer 110 and are along the longitudinal direction of the positive electrode current collector layer 110.

The second coating head 1023 is disposed along the short-side direction X of the positive electrode current collector layer 110 as depicted in FIGs. 5 and 6. The second coating head 1023 is arranged adjacent to the two first coating head 1021 along the transportation direction H of the positive electrode current collector layer 110. The second coating head 1023 is located on the downstream side in the transportation direction H of the positive electrode current collector layer 110 relative to each first coating head 1021. An elongated opening is formed in the second coating head 1023. The elongated opening is connected to the second liquid sending tube 1024. The positive electrode active material layer slurry 1100 is supplied from a tank that is not depicted to the second coating head 1023 through a pump that is not depicted and the second liquid sending tube 1024. The second coating head 1023 is opposite to the transportation roller 1011 with the interposition of the positive electrode current collector layer 110. The second coating head 1023 coats the positive electrode current collector layer 110 and the end portion insulating layer slurry 1200 with the positive electrode active material layer slurry 1100 in the state in which the positive electrode current collector layer 110 is being transported.

The drying section 1030 dries the slurry as depicted in FIG. 5. The drying section 1030 is located on the downstream side in the transportation direction H of the positive electrode current collector layer 110 relative to the coating section 1020. The drying section 1030 includes a drier 1031.

The drier 1031 is disposed along the transportation direction H of the positive electrode current collector layer 110, that is, along the longitudinal direction Y of the positive electrode current collector layer 110, as depicted in FIG. 5. The drier 1031 dries the positive electrode active material layer slurry 1100 and the end portion insulating layer slurry 1200 in the state in which the positive electrode current collector layer 110 is being transported. The drier 1031 includes a plurality of heat sources along the transportation direction H of the positive electrode current collector layer 110. The drier 1031 dries the positive electrode active material layer slurry 1100 and the end portion insulating layer slurry 1200 by using the plurality of heat sources on the basis of a plurality of conditions.

At the drying section 1030, the positive electrode active material layer slurry 1100 forms the positive electrode active material layer 120 through vaporization of the solvent. The positive electrode active material layer slurry 1100 dries through vaporization of the NMP contained in the positive electrode active material layer slurry 1100. The thickness of the positive electrode active material layer slurry 1100 along the stacking direction Z decreases in association with the drying. The positive electrode active material layer 120 is joined to the positive electrode current collector layer 110. The end portion insulating layer slurry 1200 forms the end portion insulating layers 130 through vaporization of the solvent. The end portion insulating layer slurry 1200 dries through vaporization of the NMP contained in the end portion insulating layer slurry 1200. The thickness of the end portion insulating layer slurry 1200 along the stacking direction Z decreases in association with the drying. The end portion insulating layer 130 is joined to the side portion 120a of the positive electrode active material layer 120.

The rolling section 1040 rolls the positive electrode current collector layer 110, the positive electrode active material layer 120, and the end portion insulating layers 130 in such a state as to be joined to each other, as depicted in FIG. 5. The rolling section 1040 is located on the downstream side in the transportation direction H of the positive electrode current collector layer 110 relative to the drying section 1030. The rolling section 1040 includes a rolling roller 1041 and a driven roller 1042.

The rolling roller 1041 is disposed along the short-side direction X of the positive electrode current collector layer 110 as depicted in FIG. 5. The rolling roller 1041 is opposite to the positive electrode active material layer 120 and the end portion insulating layers 130 in the positive electrode 100. The driven roller 1042 is disposed along the short-side direction X of the positive electrode current collector layer 110 as depicted in FIG. 5. The driven roller 1042 is opposite to the rolling roller 1041 with the interposition of the positive electrode 100. The driven roller 1042 is opposite to the positive electrode current collector layer 110 in the positive electrode 100. The rolling section 1040 defines the thickness of the positive electrode active material layer 120 by the interval between the rolling roller 1041 and the driven roller 1042.

In the manufacturing method for the positive electrode 100, the configuration described with reference to FIGs. 5 and 6 is a configuration in which the positive electrode active material layer 120 and the end portion insulating layers 130 are joined to one surface of the positive electrode current collector layer 110. That is, the manufacturing method for the positive electrode 100 depicted in FIGs. 5 and 6 is a manufacturing method for the positive electrode 100 with what is called single-sided coating. On the other hand, in the positive electrode 100, as depicted in FIG. 3, for example, the positive electrode active material layer 120 and the end portion insulating layers 130 are joined to both surfaces of the positive electrode current collector layer 110. That is, the positive electrode 100 depicted in FIG. 3 is formed by what is called double-sided coating. Thus, in the manufacturing method for the positive electrode 100, after the configuration described with reference to FIGs. 5 and 6, the positive electrode active material layer 120 and the end portion insulating layers 130 are joined to the other surface of the positive electrode active material layer 110.

### (Result of Comparison Experiment between Positive Electrode 100 of First Embodiment and Positive Electrodes of Contrast Examples)

A result of a comparison experiment between the positive electrode 100 of the first embodiment and positive electrodes of contrast examples is described with reference to Table 1. A result of an experiment of separation of the end portion insulating layer from the positive electrode current collector layer is indicated in Table 1.

**[Table 1]**

| | Embodiment | Contrast examples | | |
|---|---|---|---|---|
| | Condition 1 | Condition 2 | Condition 3 | Condition 4 |
| Particles (131) | Organic acrylic particles | Organic acrylic particles | Organic acrylic particles | Organic acrylic particles |
| Ratio of particles (131) in end portion insulating layer (130) | 69% | 69% | 31% | 31% |
| Binder (132) | PVdF | PVdF | PVdF | PVdF |
| Ratio of binder (132) in end portion insulating layer (130) | 31% | 31% | 69% | 69% |
| Thickness of end portion insulating layer (130) | 10µm | 18µm | 10µm | 18µm |
| Solvent of end portion insulating layer slurry (1200) | NMP | NMP | NMP | NMP |
| Suppression of separation of end portion insulating layer (130) | ○ | Δ | × | × |

The end portion insulating layer of Condition 1 corresponds to the end portion insulating layer 130 of the positive electrode 100 of the embodiment (first embodiment). On the other hand, the end portion insulating layers of Conditions 2, 3, and 4 correspond to the end portion insulating layers of the positive electrodes of the contrast examples.

In Condition 1, in the end portion insulating layer 130, the percentage of the particles 131 was set to 69%, and the percentage of the binder 132 was set to 31%. Further, in Condition 1, the thickness of the end portion insulating layer 130 in the stacking direction Z was set to 10 µm.

In Condition 2, similarly to Condition 1, in the end portion insulating layer, the percentage of the insulator was set to 69%, and the percentage of the binder was set to 31%. Moreover, in Condition 2, the thickness of the end portion insulating layer in the stacking direction Z was set to 18 µm differently from Condition 1.

In Condition 3, the condition was inverted from Condition 1. That is, in the end portion insulating layer, the percentage of the insulator was set to 31%, and the percentage of the binder was set to 69%. Further, in Condition 3, the thickness of the end portion insulating layer in the stacking direction Z was set to 10 µm similarly to Condition 1.

In Condition 4, similarly to Condition 3, in the end portion insulating layer, the percentage of the insulator was set to 31%, and the percentage of the binder was set to 69%. Moreover, in Condition 4, the thickness of the end portion insulating layer in the stacking direction Z was set to 18 µm similarly to Condition 2.

In the end portion insulating layer 130 of Condition 1, warpage relative to the positive electrode current collector layer 110 was sufficiently suppressed. That is, for the end portion insulating layer 130 of Condition 1, separation from the positive electrode current collector layer 110 was sufficiently suppressed. Therefore, concerning the suppression of the separation, the end portion insulating layer 130 of Condition 1 was given an evaluation of ∘ (separation can be sufficiently suppressed).

In the end portion insulating layer of Condition 2, warpage relative to the positive electrode current collector layer was suppressed to a certain extent. That is, for the end portion insulating layer of Condition 2, separation from the positive electrode current collector layer was suppressed to a certain extent. Therefore, concerning the suppression of the separation, the end portion insulating layer of Condition 2 was given an evaluation of △ (separation can be suppressed to a certain extent).

In the end portion insulating layer of Condition 3, warpage relative to the positive electrode current collector layer was large. That is, the end portion insulating layer of Condition 3 separated from the positive electrode current collector layer. Therefore, concerning the suppression of the separation, the end portion insulating layer of Condition 3 was given an evaluation of × (separation cannot be suppressed).

In the end portion insulating layer of Condition 4, warpage relative to the positive electrode current collector layer was larger than that in the end portion insulating layer of Condition 3. That is, the end portion insulating layer of Condition 4 separated from the positive electrode current collector layer similarly to the end portion insulating layer of Condition 3. Therefore, concerning the suppression of the separation, the end portion insulating layer of Condition 4 was given an evaluation of × (separation cannot be suppressed).

In Condition 1, in the end portion insulating layer slurry 1200 having the relatively small amount of binder 132, shrinkage is relatively suppressed when the solvent dries and the end portion insulating layer 130 is made. As a result, separation of the end portion insulating layer 130 from the positive electrode current collector layer 110 is suppressed. In the end portion insulating layer slurry 1200 having the relatively thin layer thickness, shrinkage is relatively suppressed when the solvent dries and the end portion insulating layer 130 is made. As a result, separation of the end portion insulating layer 130 from the positive electrode current collector layer 110 is suppressed.

### (Effects of Battery 1 Including Positive Electrode 100 of First Embodiment and the Like)

A description is given of effects of the battery 1 including the positive electrode 100 of the first embodiment and the like.
(1) (7) and (8) The positive electrode 100 (electrode) has the end portion insulating layer 130. The end portion insulating layer 130 extends from the side of the end portion 110b of the positive electrode current collector layer 110 (current collector layer) to the side portion 120a of the positive electrode active material layer 120 (active material layer) and is stacked on the positive electrode current collector layer 110 to be joined to the positive electrode current collector layer 110 and the positive electrode active material layer 120. The end portion insulating layer 130 contains the particles 131 and the binder 132. The occupancy percentage of the particles 131 in the end portion insulating layer 130 is at least 55% and at most 99.5%. The occupancy percentage of the particles 131 and the binder 132 in the end portion insulating layer 130 is at least 55.5% and at most 99%. In this case, the binder 132 is at least 0.5% and at most 45%. The thickness of the end portion insulating layer 130 along the stacking direction Z is at least 1/20 and at most 1/2 of the thickness of the positive electrode active material layer 120 along the stacking direction Z. According to such a configuration, warpage of the end portion insulating layer 130 relative to the positive electrode current collector layer 110 can be suppressed. That is, according to such a configuration, separation of the end portion insulating layer 130 from the positive electrode current collector layer 110 can be suppressed. As a result, it is possible to obtain the positive electrode 100 in which separation of the end portion insulating layer 130 from the positive electrode current collector layer 110 is suppressed. Further, according to such a configuration, it is possible to obtain the battery 1 including the positive electrode 100 in which separation of the end portion insulating layer 130 from the positive electrode current collector layer 110 is suppressed.
(2) The thickness of the end portion insulating layer 130 along the stacking direction Z is at least 1/10 and at most 1/5 of the thickness of the positive electrode active material layer 120 along the stacking direction Z. According to such a configuration, the end portion insulating layer 130 is sufficiently joined also to the positive electrode active material layer 120, and thus separation thereof from the positive electrode current collector layer 110 can be sufficiently suppressed.
(3) The thickness of the end portion insulating layer 130 along the stacking direction Z is at least 1 µm and at most 15 µm at a portion joined to the positive electrode current collector layer 110 or a portion joined to the positive electrode active material layer 120. According to such a configuration, the end portion insulating layer 130 is sufficiently joined also to the positive electrode active material layer 120, and thus separation thereof from the positive electrode current collector layer 110 can be sufficiently suppressed.
(4) The thickness of the end portion insulating layer 130 along the stacking direction Z is at least 2 µm and at most 5 µm. According to such a configuration, the end portion insulating layer 130 is sufficiently joined also to the positive electrode active material layer 120, and thus separation thereof from the positive electrode current collector layer 110 can be sufficiently suppressed.

(9) In the manufacturing method for the positive electrode 100, in the coating step, the percentage of shrinkage accompanying drying regarding the end portion insulating layer slurry 1200 is at least 1% and at most 40%. According to such a configuration, warpage of the end portion insulating layer 130 relative to the positive electrode current collector layer 110 due to the shrinkage can be sufficiently suppressed at the time of the drying. That is, according to such a configuration, separation of the end portion insulating layer 130 from the positive electrode current collector layer 110 can be sufficiently suppressed.

### (Configuration of Positive Electrode 400 of Second Embodiment)

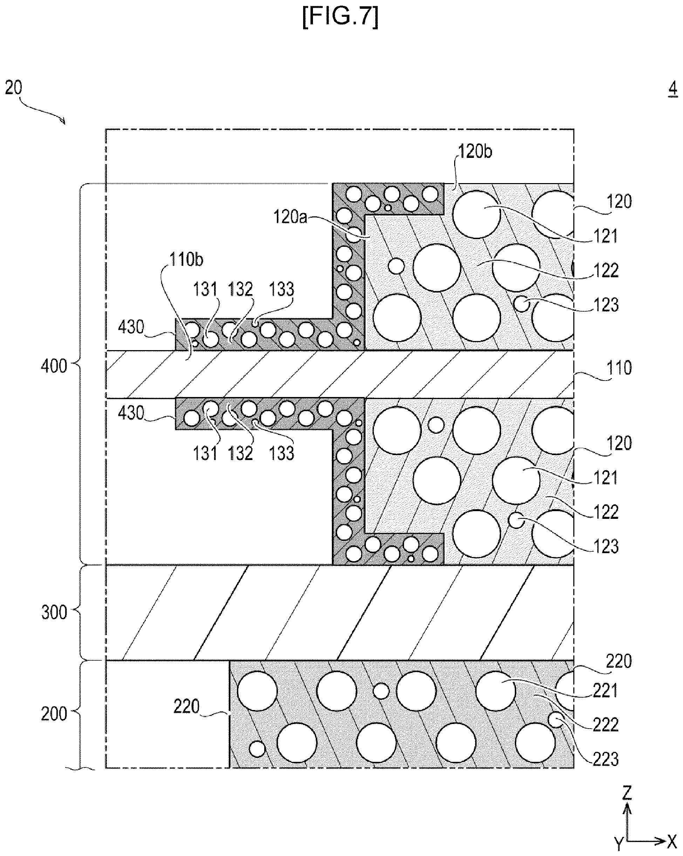

A configuration of a positive electrode 400 of a second embodiment is described with reference to FIG. 7. FIG. 7 is a sectional view depicting a charge/discharge body 20 of a battery of the second embodiment.

In the positive electrode 400, an end portion insulating layer 430 is disposed also at an end portion 120b of the positive electrode active material layer 120 differently from the positive electrode 100 of the first embodiment. Concerning the second embodiment, the same configuration as the first embodiment is given the same numeral and description thereof is omitted.

The end portion insulating layer 430 extends from the side of the end portion 110b of the positive electrode current collector layer 110 to the end portion 120b of the positive electrode active material layer 120 through the side portion 120a of the positive electrode active material layer 120 and is stacked thereon to be joined thereto. The end portion insulating layer 430 is joined to both the positive electrode current collector layer 110 and the positive electrode active material layer 120 along the short-side direction X across the side portion 120a of the positive electrode active material layer 120. That is, the end portion insulating layer 430 partly overlaps with the positive electrode active material layer 120 along the stacking direction Z.

### (Manufacturing Method for Positive Electrode 400 of Second Embodiment)

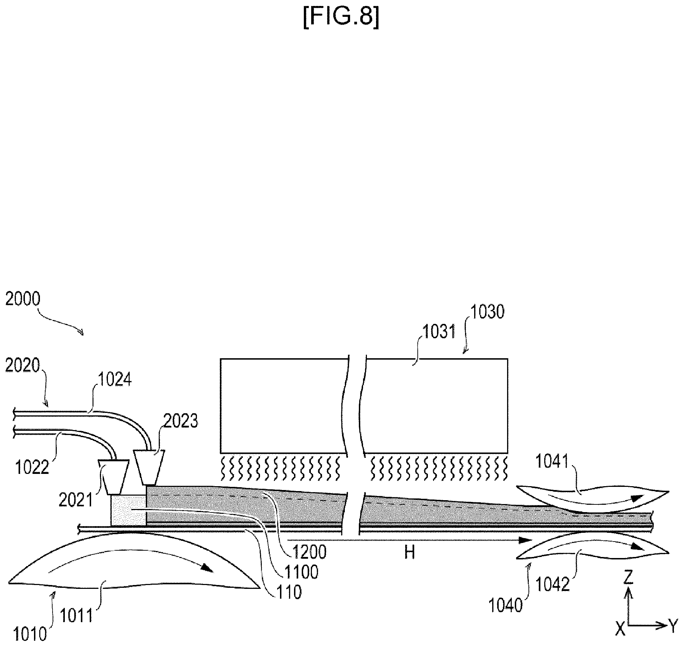

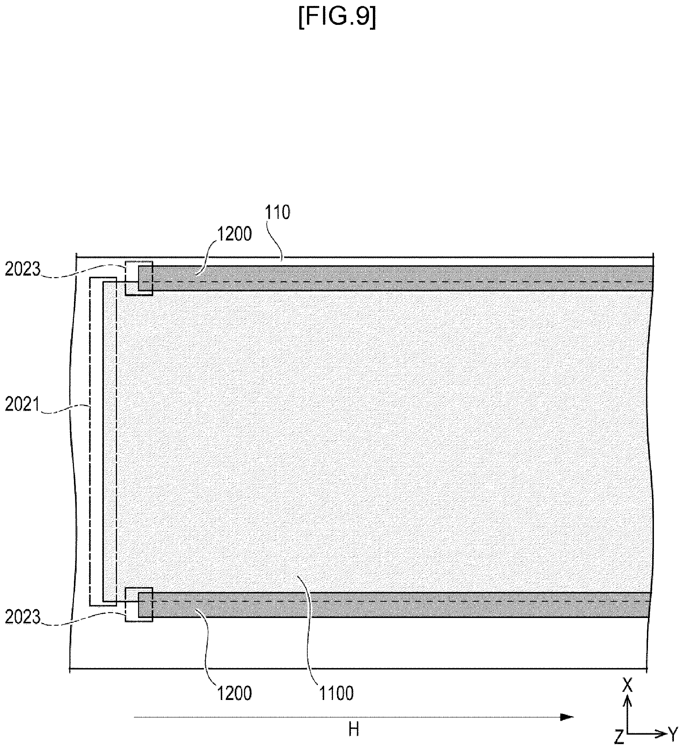

Concerning a manufacturing method for the positive electrode 400, only a configuration different from the manufacturing method for the positive electrode 100 is described with reference to FIGs. 8 and 9. FIG. 8 is a side view schematically depicting the manufacturing method for the positive electrode 400 included in the charge/discharge body 20 in FIG. 7. FIG. 9 is a top view depicting, in a schematic diagram, a state of coating of the positive electrode current collector layer 110 with the slurry in FIG. 8.

A manufacturing apparatus 2000 for the positive electrode 400 includes the transportation section 1010, a coating section 2020, the drying section 1030, and the rolling section 1040 as depicted in FIG. 8.

The coating section 2020 coats the positive electrode current collector layer 110 and the like with the slurry as depicted in FIG. 8. The coating section 2020 includes a first coating head 2021, the first liquid sending tube 1022, second coating heads 2023, and the second liquid sending tube 1024.

The first coating head 2021 is disposed along the short-side direction X orthogonal to the transportation direction H of the positive electrode current collector layer 110, that is, orthogonal to the longitudinal direction Y of the positive electrode current collector layer 110, as depicted in FIGs. 8 and 9. An elongated opening is formed in the first coating head 2021. The elongated opening is connected to the first liquid sending tube 1022. The positive electrode active material layer slurry 1100 is supplied from a tank that is not depicted to the first coating head 2021 through a pump that is not depicted and the first liquid sending tube 1022. The first coating head 2021 is opposite to the transportation roller 1011 with the interposition of the positive electrode current collector layer 110. The first coating head 2021 coats the positive electrode current collector layer 110 with the positive electrode active material layer slurry 1100 in a state in which the positive electrode current collector layer 110 is being transported.

Two second coating heads 2023 are disposed along the short-side direction X of the positive electrode current collector layer 110 as depicted in FIGs. 8 and 9. The two second coating heads 2023 are opposite to each other along the short-side direction X of the positive electrode current collector layer 110. The second coating heads 2023 are arranged adjacent to the first coating head 2021 along the transportation direction H of the positive electrode current collector layer 110. The second coating heads 2023 are located on the downstream side in the transportation direction H of the positive electrode current collector layer 110 relative to the first coating head 2021. An opening is formed in the second coating heads 2023. The opening is connected to the second liquid sending tube 1024. The end portion insulating layer slurry 1200 is supplied from a tank that is not depicted to each second coating head 2023 through a pump that is not depicted and the second liquid sending tube 1024. Each second coating head 2023 is opposite to the transportation roller 1011 with the interposition of the positive electrode current collector layer 110. Each second coating head 2023 coats the positive electrode current collector layer 110 and an end portion of the positive electrode active material layer slurry 1100 with the end portion insulating layer slurry 1200 in the state in which the positive electrode current collector layer 110 is being transported. The positive electrode current collector layer 110 is coated with the end portion insulating layer slurry 1200 such that pieces of the end portion insulating layer slurry 1200 are opposite to each other in the short-side direction of the positive electrode current collector layer 110 and are along the longitudinal direction of the positive electrode current collector layer 110. The coating with the end portion insulating layer slurry 1200 is executed to cover both ends of the positive electrode active material layer slurry 1100 in the short-side direction.

### (Effects of Battery Including Positive Electrode 400 of Second Embodiment)

A description is given of effects of the battery including the positive electrode 400 of the second embodiment.

(5) The end portion insulating layer 430 extends from the side of the end portion 110b of the positive electrode current collector layer 110 to the end portion 120b of the positive electrode active material layer 120 through the side portion 120a of the positive electrode active material layer 120 and is stacked thereon to be joined thereto. According to such a configuration, the positive electrode active material layer 120 is sufficiently joined to the end portion insulating layer 430, and thus separation thereof from the positive electrode current collector layer 110 can be sufficiently suppressed. Further, according to such a configuration, the end portion insulating layer 430 is sufficiently joined to the positive electrode active material layer 120, and thus separation thereof from the positive electrode current collector layer 110 can be sufficiently suppressed.

### (Configuration of Positive Electrode 500 of Third Embodiment)

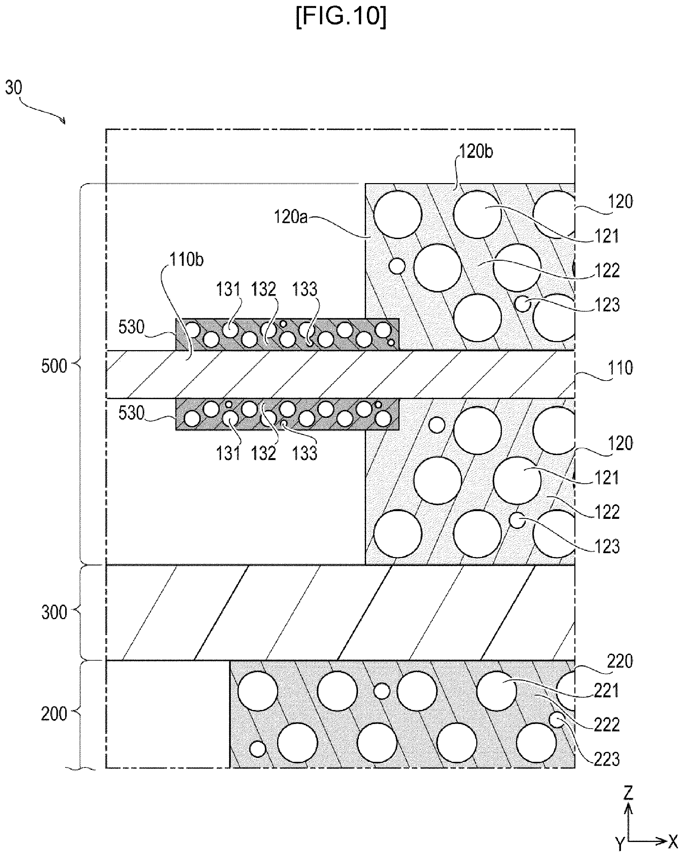

A configuration of a positive electrode 500 of a third embodiment is described with reference to FIG. 10. FIG. 10 is a sectional view depicting a charge/discharge body 30 of a battery of the third embodiment.

In the positive electrode 500, end portion insulating layers 530 are disposed also between the positive electrode current collector layer 110 and the positive electrode active material layer 120 along the stacking direction Z differently from the positive electrode 100 of the first embodiment. Concerning the third embodiment, the same configuration as the first embodiment is given the same numeral and description thereof is omitted.

The end portion insulating layer 530 extends from the side of the end portion 110b of the positive electrode current collector layer 110 to a position between the positive electrode active material layer 120 and the positive electrode current collector layer 110 and is stacked thereon to be joined thereto. The end portion insulating layer 530 is joined to both the positive electrode current collector layer 110 and the positive electrode active material layer 120 along the short-side direction X across the side portion 120a of the positive electrode active material layer 120. The end portion insulating layer 530 is disposed also between the positive electrode current collector layer 110 and the positive electrode active material layer 120. That is, the end portion insulating layer 530 partly overlaps with the positive electrode active material layer 120 along the stacking direction Z.

### (Effects of Battery Including Positive Electrode 500 of Third Embodiment)

A description is given of effects of the battery including the positive electrode 500 of the third embodiment.

(6) The end portion insulating layer 530 extends from the side of the end portion 110b of the positive electrode current collector layer 110 to a position between the positive electrode active material layer 120 and the positive electrode current collector layer 110 and is stacked thereon to be joined thereto. That is, the positive electrode active material layer 120 is sufficiently joined to the positive electrode current collector layer 110 along the stacking direction Z with the interposition of the end portion insulating layer 530 having higher affinity than that of the positive electrode current collector layer 110. According to such a configuration, the positive electrode active material layer 120 is sufficiently joined to the end portion insulating layer 530, and thus separation thereof from the positive electrode current collector layer 110 can be sufficiently suppressed. Moreover, according to such a configuration, the end portion insulating layer 530 is interposed between the positive electrode active material layer 120 and the positive electrode current collector layer 110 and is sufficiently joined, and thus separation thereof from the positive electrode current collector layer 110 can be sufficiently suppressed.

### (Batteries of Other Embodiments)

The battery of the present invention is not limited to the configurations of the batteries described in the embodiments, and can be configured as appropriate on the basis of content described in the scope of claims.

The embodiments have been described in detail or simply in order to explain the present invention in an easy-to-understand manner, and are not necessarily required to include all configurations described, or may include a configuration that is not depicted. Further, part of configurations of the embodiments may be deleted, or may be replaced by a configuration of another embodiment, or may be combined with a configuration of another embodiment.

In the electrode (positive electrode) of the present invention, the positive electrode active material is not limited to nickel (Ni) -based, cobalt (Co) -based, and manganese (Mn) -based materials. As the positive electrode active material of the present invention, for example, a Fe (olivine iron) -based material may be employed.

In the electrode (negative electrode) of the present invention, the negative electrode active material is not limited to a carbon-based material. As the negative electrode active material of the present invention, for example, a silicon-based material may be employed.

The battery of the present invention is not limited to the configuration in which the charge/discharge body is sealed by the container and the lid. The battery of the present invention can be applied to a configuration in which the charge/discharge body is sealed by a laminate film.

The battery of the present invention is not limited to the lithium-ion battery. The battery of the present invention can be applied to, for example, a nickel-metal hydride battery.

The battery of the present invention is not limited to the secondary battery. The battery of the present invention can be applied to a primary battery.

In the battery of the present invention, the charge/discharge body is not limited to the wound type obtained by bundling and winding the positive electrode, the separator, and the negative electrode each formed into an elongated shape. To the charge/discharge body of the battery of the present invention, a layer-stacking type obtained by alternately stacking multiple positive electrodes, multiple separators, and multiple negative electrodes each formed into a rectangular shape can be applied.

In the battery of the present invention, it is possible to apply, to the charge/discharge body, a layer-stacking type in which, for one separator formed into an elongated shape, a plurality of positive electrodes and a plurality of negative electrodes formed into a relatively short shape are alternately disposed while being made opposite to each other with the interposition of the separator. In the charge/discharge body having such a configuration, the positive electrodes and the negative electrodes are made opposite to each other with the interposition of the separator by folding and stacking the separator.

In the battery of the present invention, the charge/discharge body is not limited to the type of rectangular parallelepiped shape. A type of circular cylindrical shape or circular column shape can be applied to the charge/discharge body of the battery of the present invention.

In the battery of the present invention, the charge/discharge body is not limited to the configuration in which the separator having an insulating property is disposed between the positive electrode and the negative electrode. The battery of the present invention can be applied to a configuration in which at least one of the positive electrode and the negative electrode is provided with an insulating layer without disposing the separator. Such a configuration corresponds to what is called a separator-less configuration.

In the battery of the present invention, the charge/discharge body can be applied to a configuration in which the positive electrode 100 is provided with an insulating layer or the negative electrode 200 is provided with an insulating layer in addition to the configuration in which the separator 300 having an insulating property is disposed between the positive electrode 100 and the negative electrode 200.

In the battery of the present invention, the charge/discharge body is not limited to the configuration in which only one charge/discharge body is disposed. The battery of the present invention can be applied to a configuration in which two or more charge/discharge bodies are disposed.

The electrode (positive electrode, negative electrode) of the present invention is not limited to the configuration in which an end portion of the current collector layer is joined to the current collector plate. The electrode of the battery of the present invention can be applied to a type in which an electrode tab protruded from an edge of the current collector layer toward the outside is joined to the current collector plate.

The electrode (positive electrode, negative electrode) of the present invention is not limited to the configuration in which the active material layers are joined to both surfaces of the current collector layer. The electrode can be applied to a configuration in which the active material layer is joined to only one surface of the current collector layer.

The manufacturing method for the electrode (positive electrode, negative electrode) according to the present invention is not limited to the configuration in which the active material layer and the end portion insulating layer are formed by executing coating with the active material layer slurry and the end portion insulating layer slurry simultaneously and drying them simultaneously. The manufacturing method for the electrode (positive electrode, negative electrode) according to the present invention can be applied to a configuration in which, first, the current collector layer is coated with the active material layer slurry and the slurry is dried to form the active material layer. In a case of such a configuration, next, the current collector layer is coated with the end portion insulating layer slurry and the slurry is dried to form the end portion insulating layer. Further, the manufacturing method for the electrode (positive electrode, negative electrode) according to the present invention can be applied to a configuration in which, first, the current collector layer is coated with the end portion insulating layer slurry and the slurry is dried to form the end portion insulating layer. In a case of such a configuration, next, the current collector layer is coated with the active material layer slurry and the slurry is dried to form the active material layer.

The manufacturing method for the electrode (positive electrode, negative electrode) according to the present invention is not limited to the configuration in which the first coating head and the second coating head are disposed independently of each other. The manufacturing method for the electrode (positive electrode, negative electrode) according to the present invention can be applied to a configuration in which the first coating head and the second coating head are integrated with each other.

### Description of Reference Characters

1: Battery
10, 20, 30: Charge/discharge body
50: Exterior package
51: Container
52: Lid
53: Liquid injection plug
54: Rupture valve
60: External terminal
61: Positive electrode terminal
62: Negative electrode terminal
100, 400, 500: Positive electrode (electrode)
110: Positive electrode current collector layer (current collector layer)
110a: Positive electrode current collection portion 110b: End portion
120: Positive electrode active material layer (active material layer)
120a: Side portion
120b: End portion
121: Positive electrode active material layer (active material layer)
122: Positive electrode binder
123: Positive electrode conduction auxiliary agent
130, 430, 530: End portion insulating layer
131: Particle
132: Binder
133: Additive material
200: Negative electrode
210: Negative electrode current collector layer
210a: Negative electrode current collection portion
220: Negative electrode active material layer
221: Negative electrode active material
222: Negative electrode binder
223: Negative electrode conduction auxiliary agent
300: Separator (insulator)
1000, 2000: Manufacturing apparatus
1010: Transportation section
1011: Transportation roller
1020, 2020: Coating section
1021, 2021: First coating head
1022: First liquid sending tube
1023, 2023: Second coating head
1024: Second liquid sending tube
1030: Drying section
1031: Drier
1040: Rolling section
1041: Rolling roller
1042: Driven roller
1100: Positive electrode active material layer slurry
1200: Insulating layer slurry
t1: Thickness of the end portion insulating layer slurry 130 along a stacking direction Z
t2: Thickness of the positive electrode active material layer 120 along the stacking direction Z
X: Short-side direction (of the positive electrode 100, the negative electrode 200, and the separator 300)
Y: Longitudinal direction (of the positive electrode 100, the negative electrode 200, and the separator 300)
Z: Stacking direction (of the positive electrode 100, the negative electrode 200, and the separator 300)
H: Transportation direction (of the positive electrode 100, the negative electrode 200, and the separator 300) (longitudinal direction Y)

## Claims

1. An electrode comprising:
a current collector layer;
an active material layer that is stacked on and joined to the current collector layer and contains an active material; and
an end portion insulating layer that extends from a side of an end portion of the current collector layer to a side portion of the active material layer and is stacked on the current collector layer to be joined to the current collector layer and the active material layer, the end portion insulating layer containing particles and a binder, wherein
an occupancy percentage of the particles in the end portion insulating layer is equal to or higher than 55% and is equal to or lower than 99.5%,
an occupancy percentage of the particles and the binder in the end portion insulating layer is equal to or higher than 55.5% and is equal to or lower than 99%, and
a thickness of the end portion insulating layer along a stacking direction is equal to or larger than 1/20 of a thickness of the active material layer along the stacking direction and is equal to or smaller than 1/2 of the thickness of the active material layer along the stacking direction.

2. The electrode according to claim 1, wherein
the thickness of the end portion insulating layer along the stacking direction is equal to or larger than 1/10 of the thickness of the active material layer along the stacking direction and is equal to or smaller than 1/5 of the thickness of the active material layer along the stacking direction.

3. The electrode according to claim 1, wherein
the thickness of the end portion insulating layer along the stacking direction is equal to or larger than 1 µm and is equal to or smaller than 15 µm at a portion joined to the current collector layer or a portion joined to the active material layer.

4. The electrode according to claim 3, wherein
the thickness of the end portion insulating layer along the stacking direction is equal to or larger than 2 µm and is equal to or smaller than 5 um.

5. The electrode according to claim 1, wherein
the end portion insulating layer extends from the side of the end portion of the current collector layer to an end portion of the active material layer through the side portion of the active material layer and is stacked thereon to be joined thereto.

6. The electrode according to claim 1, wherein
the end portion insulating layer extends from the side of the end portion of the current collector layer to a position between the active material layer and the current collector layer and is stacked thereon to be joined thereto.

7. The electrode according to claim 1, wherein
the current collector layer is a positive electrode current collector layer, and
the active material layer is a positive electrode active material layer containing a positive electrode active material.

8. A battery comprising:
a positive electrode;
a negative electrode; and
an insulator that insulates the positive electrode from the negative electrode, wherein
at least one of the positive electrode and the negative electrode has
a current collector layer,
an active material layer that is joined to the current collector layer and contains an active material, and
an end portion insulating layer that extends from a side of an end portion of the current collector layer to a side portion of the active material layer to be joined thereto, the end portion insulating layer containing particles and a binder.

9. A manufacturing method for an electrode having
a current collector layer,
an active material layer that is stacked on and joined to the current collector layer and contains an active material, and
an end portion insulating layer that extends from a side of an end portion of the current collector layer to a side portion of the active material layer and is stacked on the current collector layer to be joined to the current collector layer and the active material layer, the end portion insulating layer containing particles and a binder,
an occupancy percentage of the particles in the end portion insulating layer being equal to or higher than 55% and being equal to or lower than 99.5%,
an occupancy percentage of the particles and the binder in the end portion insulating layer being equal to or higher than 55.5% and being equal to or lower than 99%,
a thickness of the end portion insulating layer along a stacking direction being equal to or larger than 1/20 of a thickness of the active material layer along the stacking direction and being equal to or smaller than 1/2 of the thickness of the active material layer along the stacking direction, wherein
end portion insulating layer slurry that contains the particles, the binder, and a solvent having vaporability and forms the end portion insulating layer after the current collector layer and the active material layer are coated with the end portion insulating layer slurry is used,
the manufacturing method includes a coating step of coating the current collector layer and the active material layer with the end portion insulating layer slurry, and
a percentage of shrinkage accompanying drying regarding the end portion insulating layer slurry is equal to or higher than 1% and is equal to or lower than 40%.
